# EUROPEAN PATENT APPLICATION

(11) **EP 2 671 903 A1**
(43) Date of publication of application: **11.12.2013**
(21) Application number: 11857724.6
(22) Date of filing: 04.11.2011
(51) Int. Cl.: C08G 73/00, B29C 41/12, C08J 5/18, C08L 79/00, C08L 79/08, H01B 1/12

(54) **METHOD FOR PRODUCING RESIN FILM USING ELECTROCONDUCTIVE RESIN COMPOSITION**

(30) Priority: 03.02.2011 JP 2011021395
(71) Applicant: Nitto Denko Corporation, Ibaraki-shi, Osaka 567-8680 (JP)
(72) Inventor: AKIBA, Kurato, Ibaraki-shi Osaka 567-8680 (JP); MATSUSHITA, Kiichiro, Ibaraki-shi Osaka 567-8680 (JP); TAKAHASHI, Tatsuhiro, Yonezawa-shi Yamagata 992-8510 (JP); TAKEKAWA, Yumi, Ibaraki-shi Osaka 567-8680 (JP)
(74) Representative: Müller-Boré & Partner Patentanwälte
(86) International application number: PCT/JP2011/075398
(87) International publication number: WO 2012/105097

(57) **Abstract**

There is provided a productionmethod for a resin film according to which an application liquid raw material (polyaniline solution) does not gelate over a long period of time and a resin film can be stably produced.

A production method for a resin film according to an embodiment of the present invention includes the step of heating and kneading a polyaniline in an emeraldine base state and a protonic acid to prepare a conductive resin composition.

## Description

### Technical Field

The present invention relates to a production method for a resin film involving using a conductive resin composition.

### Background Art

A conductive polyaniline obtained by doping a polyaniline has been attracting attention as a stable conductive polymer, and is known to be useful in various fields. For example, a study has been made on a method of providing a conductive polyimide film involving dissolving an undoped polyaniline (emeraldine base) in a polar solvent such as N-methyl-2-pyrrolidone (hereinafter sometimes referred to as "NMP"), adding a protonic acid as a dopant thereto to prepare a polyaniline solution in a doped state (emeraldine salt), dissolving the polyaniline solution in a polyamic acid solution, and then supplying the resultant solution to a support to form the solution into a film (see, for example, Patent Literature 1). However, the polyaniline solution gelates in about several hours, and hence, when the conductive polyimide film is put into mass production, it is difficult to store its raw material liquid for a long period of time.

### Citation List

### Patent Literature

[PTL 1] JP 2005-194528 A

### Summary of Invention

### Technical Problem

The present invention has been made to solve the conventional problem, and a main object of the present invention is to provide a production method for a resin film according to which an application liquid raw material (polyaniline solution) does not gelate over a long period of time and a resin film can be stably produced.

### Means for solving the Problems

A production method for a resin film according to an embodiment of the present invention includes the step of heating and kneading a polyaniline in an emeraldine base state and a protonic acid to prepare a conductive resin composition.

In an embodiment of the invention, the production method for a resin film further includes a step of supplying an application liquid containing the conductive resin composition and a heat-resistant resin to a support, so as to form a coating film on the support.

In an embodiment of the invention, in the application liquid, an arithmetic average particle diameter of a conductive polyaniline doped with the protonic acid and generated by the heating and kneading is 10 µm or less.

In an embodiment of the invention, the heat-resistant resin includes a polyamide-imide-based resin.

In an embodiment of the invention, he conductive resin composition is used with an addition amount of the polyaniline adjusted so as to fall within a range of 1 part by weight to 5 parts by weight with respect to 100 parts by weight of the heat-resistant resin to be incorporated into the resin film.

According to another aspect of the present invention, a resin film is provided. The resin film is obtained by the above mentioned production method.

According to another aspect of the present invention, a seamless belt is provided. The seamless belt includes the resin film.

According to another aspect of the present invention, a conductive resin composition is provided. The conductive resin composition is obtained by heating and kneading a polyaniline in an emeraldine base state and a protonic acid.

According to another aspect of the present invention, a polyaniline solution is provided. The polyaniline solution is obtained by mixing the above mentioned conductive resin composition with a non-polar solvent or a mixed solvent of a non-polar solvent and N-methyl-2-pyrrolidone.

### Advantageous Effects of Invention

According to the production method for a resin film according to an embodiment of the present invention, the conductive resin composition is prepared by heating and kneading the polyaniline in an emeraldine base state and the protonic acid, and thus the application liquid raw material (polyaniline solution) containing the conductive resin composition does not gelate over a long period of time. Consequently, the resin film can be stably obtained. In addition, through the use of such conductive resin composition, a resin film having a desired (e.g., appropriate for an intermediate transfer belt of an image-forming apparatus) surface resistivity can be obtained even when the addition amount of the polyaniline is small.

### Brief Description of Drawings

[FIGS. **1**] Graphs showing the surface resistivities (ps) and volume resistivities (pv) of resin films obtained from resin solutions of Reference Examples 7 to 9.
[FIG. 2] A graph showing the absorbances of polyaniline solutions obtained in Reference Examples 1 to 3.
[FIG. 3] A graph showing the absorbance of a polyaniline in which molecular chains are entangled.
[FIGS. 4] Graphs showing the absorbances of polyaniline solutions obtained in Reference Examples 4 to 6.

### Description of Embodiments

### A. Production method for resin film

A production method for a resin film of the present invention includes the step of heating and kneading a polyaniline in an emeraldine base state and a protonic acid to prepare a conductive resin composition.

### A-1. Conductive resin composition

The conductive resin composition is obtained by heating and kneading the polyaniline in an emeraldine base state (hereinafter sometimes simply referred to as "polyaniline") and the protonic acid. The heating and kneading allows the provision of a conductive resin composition containing a conductive polyaniline doped with the protonic acid (emeraldine salt (hereinafter sometimes simply referred to as "conductive polyaniline")). The conductive resin composition thus obtained by the heating and kneading does not gelate even when dissolved in a polar solvent and stored over a long period of time (e. g. , 1 month or more), and hence is excellent in storage stability.

The polyaniline in an emeraldine base state has, as a repeating unit, a basic skeleton as represented by the following formula (1), in which an oxidized structural unit (quinonediimine structural unit) and a reduced structural unit (phenylenediamine structural unit) are present at substantially equal mole fractions. 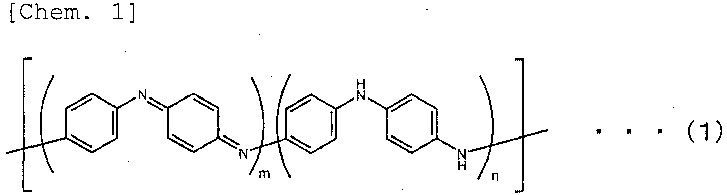 (In the formula, m represents the mole fraction of the quinonediimine structural unit in the repeating unit, n represents the mole fraction of the phenylenediamine structural unit in the repeating unit, m+n=1, and the values of m and n are substantially equal to each other.)

A production method for the polyaniline is described in, for example, JP 03-28229 A, the description of which is incorporated herein by reference.

A commercially available product may be used as the polyaniline. The commercially available polyaniline is, for example, a product available under the trade name "Panipol PA" (manufactured by Panipol).

Any appropriate protonic acid may be adopted as the acid as long as the acid can dope the polyaniline to impart conductivity thereto. The protonic acid may be an organic acid, or may be an inorganic acid.

The acid dissociation constant pKa value of the protonic acid is preferably 4.8 or less, more preferably 1 to 4.8. Examples of such protonic acid include: inorganic acids such as hydrochloric acid, sulfuric acid, nitric acid, phosphoric acid, fluoroboric acid, fluorophosphoric acid, and perchloric acid; and organic acids each having an acid dissolution constant pKa value of 4.8 or less. When a protonic acid having a pKa value of 1 to 4.8 is used, as its pKa value is smaller, that is, as its acidity is stronger, a conductive resin composition having higher conductivity is obtained. However, when the pKa value is less than 1, the conductivity of the conductive resin composition to be obtained hardly changes from there on and is almost constant. It should be appreciated that a protonic acid having a pKa value of 1 or less may be used as required.

Examples of the organic acid include: aliphatic organic acids such as an organic carbonic acid; aromatic organic acids or aromatic aliphatic organic acids, such as a phenol; and alicyclic organic acids. Those organic acids may be monobasic acids, or may be polybasic acids. The organic acid may have a substituent. Examples of the substituent include a sulfonate group, a sulfate group, a hydroxy group, a halogen group, a nitro group, a cyano group, and an amino group.

Specific examples of the organic acid may include acetic acid, n-butyric acid, pentadecafluorooctanoic acid, pentafluoroacetic acid, trifluoroacetic acid, trichloroacetic acid, dichloroacetic acid, monofluoroacetic acid, monobromoacetic acid, monochloroacetic acid, cyanoacetic acid, acetylacetic acid, nitroacetic acid, triphenylacetic acid, formic acid, oxalic acid, benzoic acid, m-bromobenzoic acid, p-chlorobenzoic acid, m-chlorobenzoic acid, p-chlorobenzoic acid, o-nitrobenzoic acid, 2,4-dinitrobenzoic acid, 3,5-dinitrobenzoic acid, picric acid, o-chlorobenzoic acid, p-nitrobenzoic acid, m-nitrobenzoic acid, trimethylbenzoic acid, p-cyanobenzoic acid, m-cyanobenzoic acid, thymol blue, salicylic acid, 5-aminosalicylic acid, o-methoxybenzoic acid, 1,6-dinitro-4-chlorophenol, 2,6-dinitrophenol, 2,4-dinitrophenol, p-oxybenzoic acid, bromophenol blue, mandelic acid, phthalic acid, isophthalic acid, maleic acid, fumaric acid, malonic acid, tartaric acid, citric acid, lactic acid, succinic acid, α-alanine, β-alanine, glycine, glycolic acid, thioglycolic acid, ethylenediamine-N,N'-diacetic acid, and ethylenediamine-N,N,N',N'-tetraacetic acid.

Specific examples of the organic acid having a sulfonate group and/or a sulfate group include aminonaphtholsulfonic acid, metanilic acid, sulfanilic acid, allylsulfonic acid, laurylsulfuric acid, xylenesulfonic acid, chlorobenzenesulfonic acid, methanesulfonic acid, ethanesulfonic acid, 1-propanesulfonic acid, 1-butanesulfonic acid, 1-hexanesulfonic acid, 1-heptanesulfonic acid, 1-octanesulfonic acid, 1-nonanesulfonic acid, 1-decanesulfonic acid, 1-dodecanesulfonic acid, benzenesulfonic acid, styrenesulfonic acid, p-toluenesulfonic acid, naphthalenesulfonic acid, ethylbenzenesulfonic acid, propylbenzenesulfonic acid, butylbenzenesulfonic acid, pentylbenzenesulfonic acid, hexylbenzenesulfonic acid, heptylbenzenesulfonic acid, octylbenzenesulfonic acid, nonylbenzenesulfonic acid, decylbenzenesulfonic acid, undecylbenzenesulfonic acid, dodecylbenzenesulfonic acid, pentadecylbenzenesulfonic acid, octadecylbenzenesulfonic acid, diethylbenzenesulfonic acid, dipropylbenzenesulfonic acid, dibutylbenzenesulfonic acid, methylnaphthalenesulfonic acid, ethylnaphthalenesulfonic acid, propylnaphthalenesulfonic acid, butylnaphthalenesulfonic acid, pentylnaphthalenesulfonic acid, hexylnaphthalenesulfonic acid, heptylnaphthalenesulfonic acid, octylnaphthalenesulfonic acid, nonylnaphthalenesulfonic acid, decylnaphthalenesulfonic acid, undecylnaphthalenesulfonic acid, dodecylnaphthalenesulfonic acid, pentadecylnaphthalenesulfonic acid, octadecylnaphthalenesulfonic acid, dimethylnaphthalenesulfonic acid, diethylnaphthalenesulfonic acid, dipropylnaphthalenesulfonic acid, dibutylnaphthalenesulfonic acid, dipentylnaphthalenesulfonic acid, dihexylnaphthalenesulfonic acid, diheptylnaphthalenesulfonic acid, dioctylnaphthalenesulfonic acid, dinonylnaphthalenesulfonic acid, trimethylnaphthalenesulfonic acid, triethylnaphthalenesulfonic acid, tripropylnaphthalenesulfonic acid, tributylnaphthalenesulfonic acid, camphorsulfonic acid, and acrylamide-t-butylsulfonic acid.

A polyfunctional organic sulfonic acid having two or more sulfonate groups in its molecule may also be used as the organic acid. Specific examples of the polyfunctional organic sulfonic acid include ethanedisulfonic acid, propanedisulfonic acid, butanedisulfonic acid, pentanedisulfonic acid, hexanedisulfonic acid, heptanedisulfonic acid, octanedisulfonic acid, nonanedisulfonic acid, decanedisulfonic acid, benzenedisulfonic acid, naphthalenedisulfonic acid, toluenedisulfonic acid, ethylbenzenedisulfonic acid, propylbenzenedisulfonic acid, butylbenzenedisulfonic acid, dimethylbenzenedisulfonic acid, diethylbenzenedisulfonic acid, dipropylbenzenedisulfonic acid, dibutylbenzenedisulfonic acid, methylnaphthalenedisulfonic acid, ethylnaphthalenedisulfonic acid, propylnaphthalene disulfonic acid, butylnaphthalenedisulfonic acid, pentylnaphthalenedisulfonic acid, hexylnaphthalenedisulfonic acid, heptylnaphthalenedisulfonic acid, octylnaphthalenedisulfonic acid, nonylnaphthalenedisulfonic acid, dimethylnaphthalenedisulfonic acid, diethylnaphthalenedisulfonic acid, dipropylnaphthalenedisulfonic acid, dibutylnaphthalenedisulfonic acid, naphthalenetrisulfonic acid, naphthalenetetrasulfonic acid, anthracenedisulfonic acid, anthraquinonedisulfonic acid, phenanthrenedisulfonic acid, fluorenonedisulfonic acid, carbazoledisulfonic acid, diphenylmethanedisulfonic acid, biphenyldisulfonic acid, terphenyldisulfonic acid, terphenyltrisulfonic acid, a naphthalenesulfonic acid-formalin condensate, a phenanthrenesulfonic acid-formalin condensate, an anthracenesulfonic acid-formalin condensate, a fluorenesulfonic acid-formalin condensate, and a carbazolesulfonic acid-formalin condensate. When the polyfunctional organic sulfonic acid has an aromatic ring, any appropriate position may be selected as the position of the sulfonate group in the aromatic ring.

The organic acid may be a polymer acid. Specific examples of the polymer acid include a polyvinylsulfonic acid, a polyvinylsulfuric acid, a polystyrenesulfonic acid, a sulfonated styrene-butadiene copolymer, a polyallylsulfonic acid, a polymethallylsulfonic acid, a poly-2-acrylamide-2-methylpropanesulfonic acid, a halogenated polyacrylic acid, a polyisoprenesulfonic acid, an N-sulfoalkylated polyaniline, and a nuclear sulfonated polyaniline. A fluorine-containing polymer known as Nafion (trademark of Dupont, US) is also suitably used as the polymer acid.

The addition amount of the protonic acid is preferably 0.01 mol to 1 mol per 1 mol of the reduced structural unit (phenylenediamine structural (imino-p-phenylene structural) unit) of the polyaniline. When the addition amount of the protonic acid falls within such range, a conductive polyaniline sufficiently doped with the protonic acid can be obtained.

The conductive resin composition may contain any appropriate additive depending on purposes and the like. Examples of the additive include a sliding filler, a heat-conductive filler, a heat-insulating filler, and a wear-resistant filler.

The conductive resin composition is obtained by heating and kneading the polyaniline and the protonic acid. It is considered that, in the conductive polyaniline obtained by the heating and kneading, the entanglement of molecular chains is undone. An apparatus that may be used for the heating and kneading is, for example: a closed kneading apparatus or batch-type kneading apparatus such as a Banbury mixer, a kneader, or a roll; or a continuous kneading apparatus such as a single-screw extruder or a twin-screw extruder.

A kneading temperature in the heating and kneading is preferably 120°C to 200°C, particularly preferably 140°C to 180°C. It is estimated that, when the kneading temperature falls within such range, the entanglement of molecular chains of the polyaniline is undone, which consequently allows the provision of a conductive polyaniline sufficiently doped with the protonic acid, and further, allows the provision of a conductive resin composition that hardly gelates in a polar solvent.

A kneading time in the heating and kneading is preferably 1 minute to 60 minutes. When the kneading time falls within such range, a conductive polyaniline sufficiently doped with the protonic acid can be obtained, and further, a conductive resin composition that hardly gelates in the polar solvent can be obtained.

### A-2. Forming

The production method for a resin film of the present invention preferably includes the step of supplying an application liquid containing the conductive resin composition and a heat-resistant resin to a support, so as to form a coating film on the support.

The conductive resin composition in the application liquid is used with the addition amount of the polyaniline adjusted so as to fall within the range of preferably 1 part by weight to 5 parts by weight, more preferably 1.5 parts by weight to 4.5 parts by weight, particularly preferably 2 parts by weight to 3 parts by weight with respect to 100 parts by weight of the heat-resistant resin to be incorporated into the resin film. It is estimated that, according to the production method for a resin film of the present invention, in the conductive polyaniline doped with the protonic acid in the conductive resin composition, the entanglement of molecular chains is undone as described above, and hence a resin film excellent in conductivity can be obtained even when the addition amount of the polyaniline is small as described above.

In the application liquid, the arithmetic average particle diameter of the conductive polyaniline doped with the protonic acid in the conductive resin composition is preferably 10 µm or less. When the arithmetic average particle diameter of the conductive polyaniline in the application liquid falls within such range, a resin film having good dispersibility in the application liquid and a small difference in surface resistivity (ps) between both sides thereof can be obtained. The conductive polyaniline having a small arithmetic average particle diameter as described above can be obtained by the heating and kneading (preferably heating and kneading at the above-mentioned temperature) of the polyaniline in an emeraldine base state and the protonic acid. It is estimated that, the heating and kneading allows the polyaniline in an emeraldine base state, in which the entanglement of molecular chains is undone, to be easily doped with the protonic acid, and as a result, the conductive polyaniline to be obtained has high solubility or dispersibility in the solvent in the application liquid, and has a reduced arithmetic average particle diameter in the application liquid. It should be noted that the arithmetic average particle diameter is, for example, calculated from a particle size distribution measured by a laser scattering particle size distribution measurement method.

Examples of the heat-resistant resin include a polyamide-imide-based resin, a polyimide-based resin, a polyether ether ketone-based resin, a polyphenylene sulfide-based resin, and apolybenzimidazole-basedresin. Of those, a polyamide-imide-based resin or a polyimide-based resin is preferred, and a polyamide-imide-based resin is particularly preferred. It should be noted that the heat-resistant resinmaybe a precursor for obtaining a heat-resistant resin. The precursor is, for example, a polyamic acid, which is a precursor of the polyimide-based resin.

When the polyamide-imide-based resin is used as the heat-resistant resin, a high-strength resin film can be easily obtained. In addition, the polyamide-imide-based resin can be formed into a film at a relatively low temperature (e.g., 200°C), and hence the thermal decomposition of the protonic acid of the conductive resin composition can be prevented. As a result, even when a conductive resin composition obtained by adding a small amount of the protonic acid is used, a resin film having desired conductive property can be obtained. In addition, when the polyamide-imide-based resin is used, the thermal decomposition of the protonic acid can be prevented as described above, and hence, in the production of the resin film by, as described later, supplying the application liquid into a cylindrical mold to form a coating film on the inner surface of the mold, and then removing (drying) the solvent by heating treatment, a film during the middle of its production hardly peels off in the drying step. In addition, when the polyimide-based resin is used as the heat-resistant resin, a resin film remarkably excellent in strength and heat resistance can be obtained.

The polyamide-imide-based resin can be produced by, for example, subj ecting an acid component, and a diamine or a diisocyanate to condensation polymerization by any appropriate method. Specifically, the polyamide-imide-based resin can be produced by stirring the acid component, and the diamine or the diisocyanate in a polar solvent such as N,N'-dimethylacetamide or N-methyl-2-pyrrolidone (NMP) while heating the mixture to a predetermined temperature (generally about 60°C to 200°C).

Examples of the acid componentinclude:trimellitic acid and trimellitic anhydride or chloride; tetracarboxylic acids such as benzene-1,2,4,5-tetracarboxylic acid (pyromellitic acid), biphenyltetracarboxylic acid, biphenyl sulfone tetracarboxylic acid, benzophenonetetracarboxylic acid, biphenyl ether tetracarboxylic acid, ethylene glycol bistrimellitate, and propylene glycol bistrimellitate and anhydrides thereof; aliphatic dicarboxylic acids such as oxalic acid, adipic acid, malonic acid, sebacic acid, azelaic acid, dodecanedicarboxylic acid, dicarboxypolybutadiene, dicarboxypoly(acrylonitrile-butadiene), and dicarboxypoly(styrene-butadiene); alicyclic dicarboxylic acids such as 1,4-cyclohexanedicarboxylic acid, 1,3-cyclohexanedicarboxylic acid, 4,4'-dicyclohexylmethanedicarboxylic acid, and dimer acid; and aromatic dicarboxylic acids such as terephthalic acid, isophthalic acid, diphenyl sulfone dicarboxylic acid, diphenyl ether dicarboxylic acid, and naphthalenedicarboxylic acid. Those acid components may be used alone or in combination.

Examples of the diamine or the diisocyanate include: aliphatic diamines such as ethylenediamine, propylenediamine, and hexamethylenediamine and diisocyanates thereof; alicyclic diamines such as 1,4-cyclohexanediamine, 1,3-cyclohexanediamine, isophoronediamine, and 4,4'-dicyclohexylmethanediamine and diisocyanates thereof; aromatic diamines such as m-phenylenediamine, p-phenylenediamine, 4,4'-diaminodiphenylmethane, 4,4'-diaminodiphenyl ether, 4,4'-diaminodiphenyl sulfone, benzidine, o-tolidine, 2,4-tolylenediamine, 2,6-tolylenediamine, and xylylenediamine and diisocyanates thereof; 1,5'-diisocyanatonaphthalene; and 4,4'-diisocyanato-3,3'-dimethylbiphenyl. Those diamines and diisocyanates may be used alone or in combination.

A commercially available product may be used as the polyamide-imide-based resin. For example, an HPC series manufactured by Hitachi Chemical Co., Ltd. and VYLOMAX manufactured by TOYOBO CO., LTD. are given.

In one embodiment, the resin film can be formed by dissolving an application liquid raw material (polyaniline solution) containing the conductive resin composition in the heat-resistant resin (e.g., polyamide-imide) to prepare an application liquid containing the heat-resistant resin and the conductive resin composition, supplying the resultant application liquid to a support to form a coating film on the support, and then removing the solvent by heating treatment. According to the present invention, the application liquid raw material hardly gelates, and hence the resin film can be stably obtained.

The concentration of the heat-resistant resin in the application liquid is preferably 10 wt% to 40 wt%, more preferably 10 wt% to 35 wt%.

The application liquid raw material can be obtained by mixing the conductive resin composition and an organic solvent.

The organic solvent may be a polar solvent, or may be a non-polar solvent. Examples of the polar solvent include N-methyl-2-pyrrolidone and N,N-dimethylacetamide. Of those, N-methyl-2-pyrrolidone is preferred. N-Methyl-2-pyrrolidone exhibits good compatibility with the heat-resistant resin (e.g., polyamide-imide). The conductive resin composition does not gelate even when stored for a long period of time (e.g., 1 month or more) in such polar solvent. Examples of the non-polar solvent include toluene and xylene. In addition, the organic solvent may be a mixed solvent of the polar solvent and the non-polar solvent. When the non-polar solvent or the mixed liquid of the polar solvent and the non-polar solvent is used, a conductive resin composition having a small average particle diameter (e.g., an arithmetic average particle diameter of 10 µm or less as described above) in the application liquid can be obtained, and as a result, a resin film having a small difference in surface resistivity (ps) between both sides thereof can be obtained. In addition, when the non-polar solvent or the mixed liquid of the polar solvent and the non-polar solvent is used, the progress of dedoping of the conductive polyaniline can be retarded.

A material for the support is, for example, a metal, glass, or a polymer film.

When a cylindrical mold is used as the support, a resin film for a seamless belt can be produced. The resin film for a seamless belt is produced by, for example, supplying the application liquid into a cylindrical mold to form a coating film on the inner surface of the mold, and then removing (drying) the solvent by heating treatment.

Any appropriate method may be adopted as a method of forming the coating film in the production of the resin film for a seamless belt. Examples thereof include: a method involving supplying the application liquid into the mold, which is rotating, and forming the liquid into a uniform coating film with a centrifugal force; a method involving inserting a nozzle along the inner surface of the mold and ejecting the application liquid from the nozzle into the mold, which is rotating, to spirally apply the liquid while running the nozzle or the mold; a method involving roughly performing the spiral application and then running a running body (of a bullet shape or a spherical shape) having a given clearance between itself and the mold; a method involving immersing the mold in the application liquid to form a coating film on its inner surface, followed by film forming with a cylindrical die or the like; and a method involving supplying the application liquid to one end portion of the inner surface of the mold and then running the running body (of a bullet shape or a spherical shape) having a given clearance between itself and the mold.

A temperature in the heating treatment is preferably 100°C to 300°C, more preferably 150°C to 250°C. A time period for the heating treatment is preferably 10 minutes to 60 minutes.

The heating treatment may be performed in two stages. When the heating treatment is performed in two stages, a resin film free of a defect in the surface can be obtained. First heating treatment (primary drying) is preferably performed to such an extent that the fluidity of the coating film formed on the inner surface of the mold can disappear. In a preferred embodiment, the primary drying is performed by bringing hot air into contact from the outside of the mold. Through the contact with hot air, a resin film free of a defect in the surface can be obtained. When the heating treatment is performed in two stages, a temperature in the primary drying is preferably 75°C to 85°C. A heating time for the primary drying is preferably 10 minutes to 60 minutes. A heating temperature in the secondary heating treatment is preferably 150°C to 300°C. A heating time for the secondary heating treatment is preferably 10 minutes to 60 minutes.

In another embodiment, the resin film can be formed by supplying an application liquid containing the conductive resin composition and the polyamic acid to a support to form a coating film on the support, and then performing heating treatment to generate a polyimide-based resin from the polyamic acid. Specifically, the resin film can be formed by: (1) mixing an organic polar solvent containing the conductive resin composition (application liquid raw material), a tetracarboxylic dianhydride or a derivative thereof, and a diamine compound, and then subjecting the tetracarboxylic dianhydride or the derivative thereof and the diamine compound to a polymerization reaction, which generates the polyamic acid, to thereby prepare an application liquid containing the conductive resin composition and the polyamic acid; and (2) supplying the application liquid on a support to form a coating film, and then performing heating treatment, which allows the ring-closure imidation reaction of the polyamic acid to proceed, to thereby generate a polyimide-based resin. According to the present invention, not only the application liquid raw material hardly gelates, but also the application liquid hardly gelates even when containing the polyamic acid, and hence the resin film can be stably obtained.

Any appropriate solvent may be adopted as the organic polar solvent as long as it allows the tetracarboxylic dianhydride or the derivative thereof and the diamine compound to be subjected to a polymerization reaction. Specific examples of the organic polar solvent include N,N-dimethylformamide, N,N-dimethylacetamide, N,N-diethylformamide, N,N-diethylacetamide, N,N-dimethylmethoxyacetamide, dimethyl sulfoxide, hexamethylphosphotriamide, N-methyl-2-pyrrolidone, pyridine, tetramethylene sulfone, and dimethyltetramethylene sulfone. Of those, N,N-dimethylformamide and N,N-dimethylacetamide are preferred. When the solvent is a low molecular weight solvent as described above, it can be easily removed from an application liquid by evaporation, substitution, or diffusion. The organic polar solvents may be used alone or in combination.

Specific examples of the tetracarboxylic dianhydride include 3,3',4,4'-biphenyltetracarboxylic dianhydride, pyromellitic dianhydride, 3,3',4,4'-benzophenonetetracarboxylic dianhydride, 3,3',4,4'-biphenyltetracarboxylic dianhydride, 2,3,3',4-biphenyltetracarboxylic dianhydride, 2,3,6,7-naphthalenetetracarboxylic dianhydride, 1,2,5,6-naphthalenetetracarboxylic dianhydride, 1,4,5,8-naphthalenetetracarboxylic dianhydride, 2,2'-bis(3,4-dicarboxyphenyl)propane dianhydride, bis(3,4-dicarboxyphenyl) sulfone dianhydride, perylene-3,4,9,10-tetracarboxylic dianhydride, bis(3,4-dicarboxyphenyl) ether dianhydride, and ethylenetetracarboxylic dianhydride. Of those, 3,3',4,4'-biphenyltetracarboxylic dianhydride is preferred.

Specific examples of the diamine compound include p-phenylenediamine, 4,4'-diaminodiphenyl ether, 4,4'-diaminodiphenylmethane, 3,3'-diaminodiphenylmethane, 3,3'-dichlorobenzidine, 4,4'-diaminodiphenyl sulfide, 3,3'-diaminodiphenyl sulfone, 1,5-diaminonaphthalene, m-phenylenediamine, 3,3'-dimethyl-4,4'-biphenyldiamine, benzidine, 3,3'-dimethylbenzidine, 3,3'-dimethoxybenzidine, 4,4'-diaminodiphenyl sulfone, 4,4'-diaminodiphenyl sulfide, 4,4'-diaminodiphenylpropane, 2,4-bis(β-amino-t-butyl)toluene, bis(p-β-amino-t-butylphenyl) ether, bis(p-β-methyl-δ-aminophenyl)benzene, bis-p-(1,1-dimethyl-5-amino-pentyl)benzene, 1-isopropyl-2,4-m-phenylenediamine, m-xylylenediamine, p-xylylenediamine, di(p-aminocyclohexyl)methane, hexamethylenediamine, heptamethylenediamine, octamethylenediamine, nonamethylenediamine, decamethylenediamine, diaminopropyltetramethylene, 3-methylheptamethylenediamine, 4,4-dimethylheptamethylenediamine, 2,11-diaminododecane, 1,2-bis-3-aminopropoxyethane, 2,2-dimethylpropylenediamine, 3-methoxyhexamethylenediamine, 2,5-dimethylheptamethylenediamine, 3-methylheptamethylenediamine, 5-methylnonamethylenediamine, 2,11-diaminododecane, 2,17-diaminoeicosadecane, 1,4-diaminocyclohexane, 1,10-diamino-1,10-dimethyldecane, 1,12-diaminooctadecane, and 2,2-bis[4-(4-aminophenoxy)phenyl]propane. Of those, p-phenylenediamine or 4,4'-diaminodiphenyl ether is preferred.

In the polymerization reaction, a catalyst is preferably added. Any appropriate catalyst may be adopted as the catalyst. Specific examples of the catalyst include aliphatic tertiary amines, aromatic tertiary amines, and heterocyclic tertiary amines. Of those, a nitrogen-containing heterocyclic compound such as imidazole, benzimidazole, isoquinoline, quinoline, diethylpyridine, or β-picoline is preferred. The use amount of the catalyst is 0.04 molar equivalent to 0.4 molar equivalent, preferably 0.05 molar equivalent to 0.4 molar equivalent with respect to 1 molar equivalent of the amic acid in the application liquid. When the addition amount of the catalyst is 0.04 molar equivalent or less, the effect of the catalyst is not sufficient. In addition, even when 0.4 molar equivalent or more of the catalyst is added, no improvement in the effect is observed.

A monomer concentration (total concentration of the tetracarboxylic dianhydride component and the diamine component in the solvent) in the polymerization reaction is preferably 5 wt% to 30 wt%.

A reaction temperature in the polymerization reaction is preferably 80 °C or less, more preferably 5 °C to 50 °C. In addition, a reaction time is preferably 5 hours to 10 hours.

The solution viscosity of the application liquid containing the conductive resin composition and the polyamic acid is preferably 1 Pa·s (25°C) to 1,000 Pa·s (25°C) as measured with a B-type viscometer. The solution viscosity of the application liquid may be adjusted to a desired viscosity by further heating and stirring the application liquid obtained after the polymerization reaction. A temperature in the heating is preferably 50°C to 90°C.

After the polymerization reaction, the application liquid containing the conductive resin composition and the polyamic acid is supplied onto a support to form a coating film, and then the ring-closure imidation reaction of the polyamic acid is allowed to proceed to generate a polyimide-based resin. Thus, a resin film is formed. The support and a method of forming the coating film are as described above.

The ring-closure imidation reaction is performed by heating. The heating also allows the solvent to be removed. A temperature in the heating may be set to any appropriate temperature. A multi-stage heating system is preferably adopted. In the multi-stage heating system, it is preferred that heating be first performed at a low temperature of about 80 to 180°C to remove the solvent by evaporation, and the temperature be then increased to about 250 to 400°C to perform the ring-closure imidation reaction. A heating time may be appropriately set depending on the heating temperature. The heating time is generally about 10 to 60 minutes for each of the low-temperature heating and the subsequent high-temperature heating. When such multi-stage heating system is used, the occurrence of fine voids due to the evaporation of ring-closure water generated owing to imide conversion and the solvent can be prevented.

### B. Resin film

The resin film obtained by the production method contains the conductive polyaniline and the heat-resistant resin. The content ratio of the conductive polyaniline is preferably 1 part by weight to 5 parts by weight, more preferably 1.5 parts by weight to 4.5 parts by weight, particularly preferably 2 parts by weight to 3 parts by weight with respect to 100 parts by weight of the heat-resistant resin.

The surface resistivity (ps) of the resin film may be set to any appropriate value depending on applications. According to the production method of the present invention, even when the addition amount of the polyaniline is small, a resin film whose surface resistivity is adjusted over a wide range can be obtained. For example, when the resin film is used as an intermediate transfer belt, the surface resistivity (ps) of the resin film is set to preferably 6 (log(ohms per square (Ω/□))) to 15 (logΩ/□), more preferably 9 (logΩ/□) to 12 (logΩ/□).

A difference in surface resistivity (ps) between both sides of the resin film is preferably 0 (logΩ/□) to 1 (logΩ/□).

The volume resistivity (pv) of the resin film may be set to any appropriate value depending on applications. According to the production method of the present invention, even when the addition amount of the polyaniline is small, a resin film whose volume resistivity is adjusted over a wide range can be obtained. For example, when the resin film is used as an intermediate transfer belt, the volume resistivity (pv) of the resin film is set to preferably 6 (logΩ/cm) to 15 (logΩ/cm), more preferably 9 (logΩ/cm) to 12 (logΩ/cm).

The thickness of the resin film may be set to any appropriate thickness depending on applications. The thickness is typically 50 µm to 100 µm.

### C. Seamless belt

The seamless belt of the present invention contains the resin film. The seamless belt may include a layer other than a layer formed of the resin film.

The volume resistivity (pv) of the seamless belt is preferably 6 (logΩ/cm) to 15 (logΩ/cm), more preferably 9 (logΩ/cm) to 12 (logΩ/cm).

### Examples

Hereinafter, the present invention is specifically described by way of Examples. However, the present invention is by no means limited by Examples.

### (Example 1)

23.1 g of a polyaniline (manufactured by PANIPOL, trade name: "PANIPOL PA") and 81.9 g of dodecylbenzenesulfonic acid (manufactured by KANTO CHEMICAL CO., INC., pKa value=2.55) were mixed through the use of Awatori Rentaro (manufactured by THINKY CORPORATION, mixing mode) for 3 minutes. The resultant mixture was heated and kneaded through the use of Laboplastomill 50MR (manufacturedbyToyoSeikiSeisaku-Sho, Ltd.) at 180°C for 30 minutes. Thus, a conductive resin composition was obtained.

The resultant conductive resin composition was dissolved in NMP so as to achieve a concentration of 3 wt%, and the whole was stirred with a stirrer for 2 hours. Thus, a polyaniline solution was obtained.

### (Example 2)

Immediately after the polyaniline solution had been obtained as described in Example 1, a polyamide-imide resin solution (manufactured by Hitachi Chemical Company, Ltd., trade name: "HPC-7200," solvent: NMP, solid content: 30%) and the polyaniline solution obtained in Example 1 were mixed so that the solid content of the polyamide-imide resin was 100 parts by weight with respect to 2 parts by weight of the polyaniline added in Example 1. Thus, a resin solution was obtained.

### (Example 3)

A resin solution was obtained in the same manner as in Example 2 except that the mixing was performed so that the solid content of the polyamide-imide resin was 100 parts by weight with respect to 2.5 parts by weight of the polyaniline added in Example 1.

### (Example 4)

A resin solution was obtained in the same manner as in Example 2 except that the mixing was performed so that the solid content of the polyamide-imide resin was 100 parts by weight with respect to 3 parts by weight of the polyaniline added in Example 1.

### (Comparative Example 1)

0.5 g of a polyaniline (manufactured by PANIPOL, trade name: "PANIPOL PA") and 1.8 g of dodecylbenzenesulfonic acid (manufactured by KANTO CHEMICAL CO., INC., pKa value=2. 55) were dissolved in NMP so as to achieve a concentration of 3 wt%, and then the whole was stirred with a stirrer at 25°C for 2 hours. Thus, a polyaniline solution was obtained.

### (Comparative Example 2)

Immediately after the polyaniline solution had been obtained as described in Comparative Example 1, a polyamide-imide resin solution (manufactured by Hitachi Chemical Company, Ltd., trade name: "HPC-7200," solvent: NMP, solid content: 30%) and the polyaniline solution obtained in Comparative Example 1 were mixed so that the solid content of the polyamide-imide resin was 100 parts by weight with respect to 5 parts by weight of the polyaniline added in Comparative Example 1. Thus, a resin solution was obtained.

### (Comparative Example 3)

A resin solution was obtained in the same manner as in Comparative Example 2 except that the mixing was performed so that the solid content of the polyamide-imide resin was 100 parts by weight with respect to 10 parts by weight of the polyaniline added in Comparative Example 1.

### (Comparative Example 4)

A resin solution was obtained in the same manner as in Comparative Example 2 except that the mixing was performed so that the solid content of the polyamide-imide resin was 100 parts by weight with respect to 15 parts by weight of the polyaniline added in Comparative Example 1.

### (Reference Example 1)

23.1 g of a polyaniline (manufactured by PANIPOL, trade name: "PANIPOL PA") and 81.9 g of dodecylbenzenesulfonic acid (manufactured by KANTO CHEMICAL CO., INC., pKa value=2.55) were mixed through the use of Awatori Rentaro (manufactured by THINKY CORPORATION, mixing mode) for 3 minutes. The resultant mixture was heated and kneaded through the use of Laboplastomill 50MR (manufactured by Toyo Seiki Seisaku-Sho, Ltd.) at 180°C for 30 minutes. Thus, a conductive resin composition was obtained.

The resultant conductive resin composition was mixed with toluene so as to achieve a content ratio of 3 wt%, and the whole was stirred with a stirrer for 2 hours. Thus, a polyaniline solution was obtained.

### (Reference Example 2)

A polyaniline solution was obtained in the same manner as in Reference Example 1 except that the temperature in the heating and kneading was changed to 160°C.

### (Reference Example 3)

A polyaniline solution was obtained in the same manner as in Reference Example 1 except that the temperature in the heating and kneading was changed to 140°C.

### (Reference Example 4)

A polyaniline solution was obtained in the same manner as in Reference Example 1 except that the conductive resin composition was mixed with NMP so as to achieve a content ratio of 0.1 wt%.

### (Reference Example 5)

A polyaniline solution was obtained in the same manner as in Reference Example 1 except that the conductive resin composition was mixed with toluene so as to achieve a content ratio of 0.1 wt%.

### (Reference Example 6)

A polyaniline solution was obtained in the same manner as in Reference Example 1 except that the conductive resin composition was mixed with a mixed solvent of NMP and toluene (NMP/toluene=50/50 (weight ratio)) so as to achieve a content ratio of 0.1 wt%.

### (Reference Example 7)

The polyaniline solution obtained in Reference Example 1 was subjected to ultrasonic treatment for 2 hours. After that, the polyaniline solution was mixed with a polyamide-imide resin solution (manufactured by Hitachi Chemical Company, Ltd., trade name: "HPC-7200," solvent: NMP, solid content: 30%) so that the solid content of the polyamide-imide resin was 100 parts by weight with respect to 1.9 parts by weight of the added polyaniline. Thus, a resin solution was obtained.

### (Reference Example 8)

A resin solution was obtained in the same manner as in Reference Example 7 except that the polyaniline solution obtained in Reference Example 2 was used in place of the polyaniline solution obtained in Reference Example 1.

### (Reference Example 9)

A resin solution was obtained in the same manner as in Reference Example 7 except that the polyaniline solution obtained in Reference Example 3 was used in place of the polyaniline solution obtained in Reference Example 1.

### <Evaluations>

### (Storage stability)

Each of the polyaniline solutions obtained in Example 1 and Comparative Example 1 was visually observed for its states after a lapse of 24 hours and after a lapse of 30 days. Table 1 shows evaluation results.

### (Surface resistivity)

Each of the resin solutions obtained in Examples 2 to 4 and Comparative Examples 2 to 4 was cast onto a glass plate, and then heated at 200°C. Thus, a resin film was obtained. The resultant resin film was measured for its surface resistivity on an air surface side (side opposite to the glass plate) with Hiresta UP MCP-HTP16 (manufactured by Mitsubishi Chemical Analytech Co., Ltd., probe: URS) under the measurement conditions of an applied voltage of 500 V/10 seconds in an environment of 25°C/60%RH. Table 2 shows the results of the measurement in common logarithmic values.

In addition, each of the resin solutions obtained in Reference Examples 7 to 9 was cast onto a glass plate, and then heated at 200°C. Thus, a resin film was obtained. The resultant resin film was measured for its surface resistivities (ps) on an air surface side and a glass plate side with Hiresta UP MCP-HTP16 (manufactured by Mitsubishi Chemical Analytech Co., Ltd., probe: URS) under the measurement conditions of an applied voltage of 100 V/10 seconds, 250V/10 seconds, and 500 V/10 seconds in an environment of 25°C/60%RH. Table 1 shows the results of the measurement.

### (Volume resistivity)

Each of the resin solutions obtained in Reference Examples 7 to 9 was cast onto a glass plate, and then heated at 200°C. Thus, a resin film was obtained. The resultant resin film was measured for its volume resistivities (pv) on an air surface side and a glass plate side with Hiresta UP MCP-HTP16 (manufactured by Mitsubishi Chemical Analytech Co., Ltd., probe: URS) under the measurement conditions of an appliedvoltage of 100V/10 seconds, 250V/10 seconds, and 500 V/10 seconds in an environment of 25°C/60%RH. Table 1 shows the results of the measurement.

### (Particle diameter of conductive polyaniline)

Each of the polyaniline solutions obtained in Reference Examples 1 to 3 was subjected to ultrasonic treatment for 2 hours. After that, the polyaniline solution was diluted with toluene so that the content ratio of the conductive resin composition was 1 wt%, and was further diluted with toluene so that the content ratio was 0.05 wt%. The resultant solution was measured for its particle size distribution with a laser diffraction/scattering particle size distribution analyzer LA-920 (manufactured by HORIBA, Ltd.), and its arithmetic average particle diameter was calculated. In addition, a mixed liquid mixed with toluene so that the content ratio of a polyaniline (manufacturedbyPANIPOL, trade name: "PANIPOL PA") was 0.05 wt% was prepared as a reference, and its arithmetic average particle diameter was similarly calculated. Table 3 shows the results.

**[Table 1]**

| | Example 1 | Comparative Example 1 |
|---|---|---|
| Storage stability (after 24 hours) | No change | Gelation |
| Storage stability (after 30 days) | No change | Gelation |

**[Table 2]**

| | Example 2 | Example 3 | Example 4 | Comparative Example 2 | Comparative Example 3 | Comparative Example 4 |
|---|---|---|---|---|---|---|
| Addition amount of polyaniline (parts) | 2.0 | 2.5 | 3.0 | 5.0 | 10 | 15 |
| Surface resistivity (logΩ/□) | 14 or more | 9.9 | 7.1 | 14 or more | 12.7 | 8.4 |

**[Table 3]**

| | PANIOPOL PA | Reference Example 1 | Reference Example 2 | Reference Example 3 |
|---|---|---|---|---|
| Arithmetic average particle diameter (µm) | 22.8 | 7.19 | 15.39 | 19.67 |

As apparent from Table 1, the conductive resin composition used in the production method for a resin film of the present invention, even when dissolved in a polar solvent, does not gelate over a long period of time, and hence is excellent in storage stability.

As apparent from a comparison between Examples 2 to 4 and Comparative Examples 2 to 4 in Table 2, through the use of the conductive resin composition obtained by heating and kneading the polyaniline and the protonic acid, a resin film whose surface resistivity is adjusted over a wide range can be obtained even when the addition amount of the polyaniline is small. It should be noted that, in each of Examples 2 to 4 and Comparative Examples 2 to 4, the polyaniline solution used in the production of the resin solution did not gelate.

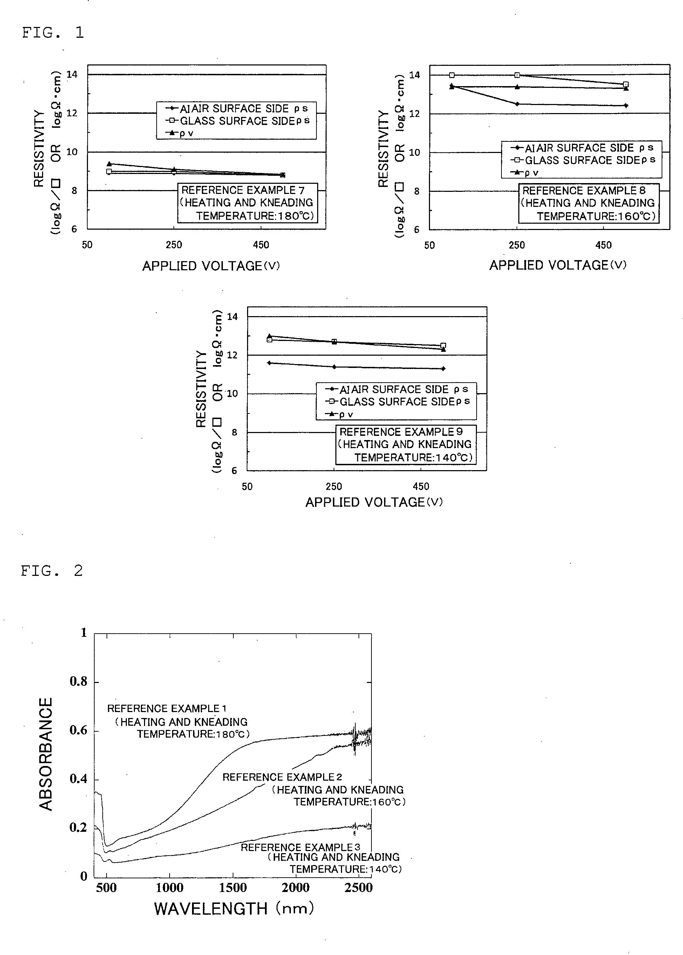

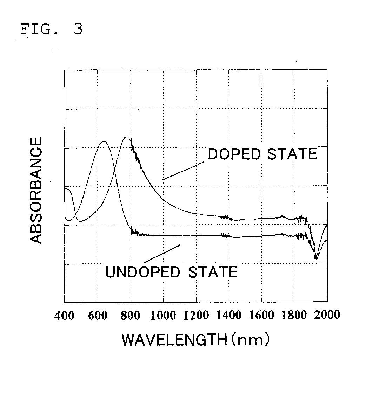

Each of the polyaniline solutions obtained in Reference Examples 1 to 3 was measured for its absorbance with a U-4100 spectrophotometer (manufactured by Hitachi, Ltd., using 1-mm cell). FIG. 2 shows the results. The polyaniline solutions obtained in Reference Examples 1 to 3 do not have an absorption peak attributed to a polyaniline in which molecular chains are entangled (absorption peak appearing at 600 to 800 nm as shown in FIG. **3****)**. That is, the conductive polyaniline in each of the polyaniline solutions obtained in Reference Examples 1 to 3 is considered to be in a state in which the entanglement of molecular chains is undone. Such conductive polyaniline is considered to have an improved mobility of molecular chains, be sufficiently doped with the protonic acid, be easily dissolved or dispersed in toluene, and thus have a reduced particle diameter as shown in Table 3. In addition, when such polyaniline solution is used, a resin film having a small difference in surface resistivity (ps) between both sides thereof can be obtained (Reference Examples 7 to 9, FIGS. **1****).** Such effect is more remarkably obtained when the kneading temperature is higher (Reference Examples 1 and 7).

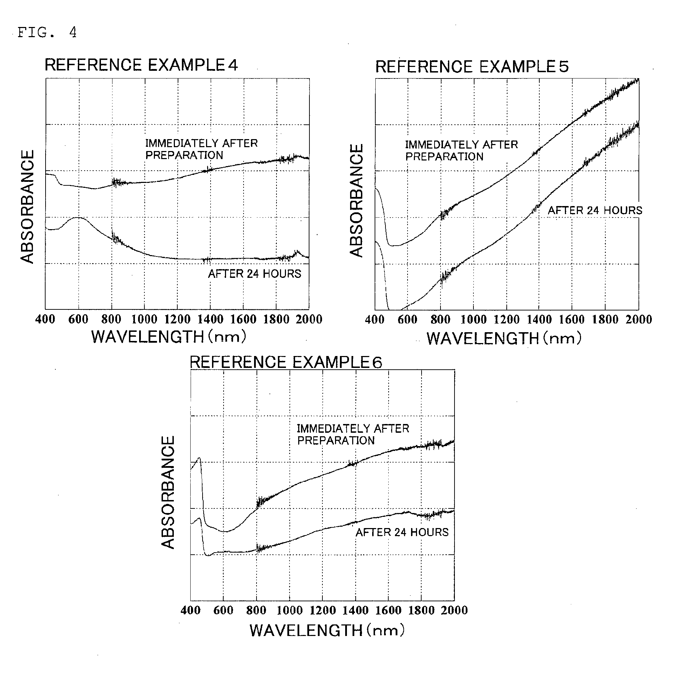

Each of the polyaniline solutions obtained in Reference Examples 4 to 6 was measured for its absorbances immediately after the preparation of the solution and after a lapse of 24 hours from the preparation with a U-4100 spectrophotometer (manufactured by Hitachi, Ltd., using 1-mm cell). FIGS. **4** show the results. In each of the polyaniline solutions prepared with a solvent containing toluene as a non-polar solvent (Reference Examples 5 and 6), an absorption peak attributed to a polyaniline in an undoped state (absorption peak appearing around 600 nm as shown in FIG. **3**) does not appear even after a lapse of 24 hours, showing that dedoping is suppressed.

### Industrial Applicability

The conductive resin composition and resin film to be obtained by the present invention can be suitably used for, for example, an electromagnetic shielding material, an electrostatic adsorption film, an antistatic material, an image-forming apparatus part, and an electronic device. The seamless belt to be obtained by the present invention can be suitably used for, for example, an intermediate transfer belt of an image-forming apparatus for forming and recording an image by an electrophotographic system.

## Claims

1. A production method for a resin film, comprising the step of heating and kneading a polyaniline in an emeraldine base state and a protonic acid to prepare a conductive resin composition.

2. A production method for a resin film according to claim 1, further comprising a step of supplying an application liquid containing the conductive resin composition and a heat-resistant resin to a support, so as to form a coating film on the support.

3. A production method for a resin film according to claim 2, wherein, in the application liquid, an arithmetic average particle diameter of a conductive polyaniline doped with the protonic acid and generated by the heating and kneading is 10 µm or less.

4. A production method for a resin film according to claim 3, wherein the heat-resistant resin comprises a polyamide-imide-based resin.

5. A production method for a resin film according to any one of claims 2 to 4, wherein the conductive resin composition is used with an addition amount of the polyaniline adjusted so as to fall within a range of 1 part by weight to 5 parts by weight with respect to 100 parts by weight of the heat-resistant resin to be incorporated into the resin film.

6. A resin film, which is produced by the production method according to any one of claims 1 to 5.

7. A seamless belt, comprising the resin film according to claim 6.

8. Conductive resin composition, which is obtained by heating and kneading a polyaniline in an emeraldine base state and a protonic acid.

9. A polyaniline solution, which is obtained by mixing the conductive resin composition according to claim 8 with a non-polar solvent or a mixed solvent of a non-polar solvent and N-methyl-2-pyrrolidone.
